# EUROPÄISCHE PATENTSCHRIFT

(11) **EP 1 035 135 B1**
(45) Veröffentlichungstag und Bekanntmachung des Hinweises auf die Patenterteilung: **13.10.2004**
(21) Anmeldenummer: 00103341.4
(22) Anmeldetag: 21.02.2000
(51) Int. Cl.: C08B 31/04, C08B 3/06, C12P 19/00

(54) **Regioselektiv substituierte Ester von Oligo- und Polysacchariden und Verfahren zu ihrer Herstellung**
Regioselectively substituted esters of oligosaccharides and polysaccharides and process for their preparation
Esters d'oligosaccharides et de polysaccharides substitués de façon régiosélective et procédé de préparation

(30) Priorität: 05.03.1999 DE 19909786; 27.10.1999 DE 19951734
(43) Veröffentlichungstag der Anmeldung: 13.09.2000
(73) Patentinhaber: Wolff Walsrode AG, 29655 Walsrode (DE)
(72) Erfinder: Klohr, Erik-Andreas, Dr., 29664 Walsrode (DE); Koch, Wolfgang, Dr., 29699 Bomlitz (DE); Klemm, Dieter, Prof. Dr., 99425 Weimar (DE); Dicke, René, 07745 Jena (DE)
(74) Vertreter: Pettrich, Klaus-Günter, Dr.

(56) Entgegenhaltungen:
- EP-A- 0 791 604
- WO-A-91/13100
- DE-A- 4 434 877
- HAO A Y ET AL: "CONVENIENT PREPARATION OF MONOACYLATED -CYCLODEXTRIN (CYCLOMALTOHEPTAOSE) ON THE SECONDARY HYDROXYL SIDE" CARBOHYDRATE RESEARCH,NL,ELSEVIER SCIENTIFIC PUBLISHING COMPANY. AMSTERDAM, Bd. 277, Nr. 2, 22. November 1995 (1995-11-22), Seiten 333-337, XP000535513 ISSN: 0008-6215
- AKIHIKO UENO ET AL.: "Selective sulfonation of a secondary hydroxyl group of beta-cyclodextrin." TETRAHEDRON LETTERS, Bd. 23, 1982, Seiten 3451-3454, XP000914612
- PER MANSSON ET AL.: "Homogeneous acetylation of cellulose via the nitrite ester." CELLULOSE CHEMISTRY AND TECHNOLOGY, Bd. 14, Nr. 1, 1980, Seiten 13-17, XP000920654

## Beschreibung

Die Erfindung betrifft ein Verfahren zur Herstellung regioselektiv insbesondere an der C2-Position der Anhydroglukoseeinheit (AGU) substituierte Ester von Oligo - und Polysacchariden durch den Einsatz von Enzymen oder bestimmter Salze als Katalysatoren bei der Esterbildung. Derartige regioselektiv substituierte Ester unterscheiden sich in wesentlichen Eigenschaften von herkömmlichen, statistisch funktionalisierten Produkten.

Es ist bekannt, dass bei Anwendung herkömmlicher Veresterungsverfahren auf Oligo- und Polysaccharide Produkte mit statistischer Verteilung der Estergruppen innerhalb der AGU sowie entlang der Kette entstehen. Diese Statistik ist abhängig von der elektronischen bzw. räumlichen Zugänglichkeit der einzelnen Hydroxylgruppen. So ist z.B. bei Stärke die Hydroxylgruppe der C6-Position eine primäre Gruppe, die sterisch gut zugänglich ist und die damit speziell bei heterogenen Umsetzungen die höchste Zugänglichkeit besitzt. Die Hydroxylfunktion der C2-Position unterliegt dem elektronischen Einfluss der benachbarten glycosidischen Bindung sowie dem Elektronenzug des Ringsauerstoffs. Gerade bei homogenen Verfahren hat sich gezeigt, dass die C2-Position aus diesem Grund zuerst umgesetzt wird. In keinem der genannten Fälle aber wird eine vollständige Umsetzung nur einer Hydroxylgruppe erreicht.

Unter Ausnutzung solcher Zugänglichkeitsunterschiede können mit Hilfe von Schutzgruppen, die meist räumlich anspruchsvoll und leicht abspaltbar sind, selektiv Hydroxylgruppen blockiert werden, so dass in Folgereaktionen regioselektive Derivate gebildet werden.

Solche Schutzgruppen sind z.B. Triphenylmethylgruppen oder großvolumige organische Siliziumverbindungen, wie Thexyl- oder tert-Butyl-dimethylsilylgruppen.

Diese Art der Synthese hat aber den entscheidenden Nachteil, dass mit der Einführung der Schutzgruppe und deren Abspaltung mindestens zwei zusätzliche Reaktionsschritte erforderlich sind. Weitere Nachteile bestehen in der, teilweise unvollständigen, Schutzgruppenabspaltung, der restlosen Entfernung der dabei entstehenden, z.T. toxischen, Spaltprodukte sowie eines unter den Spaltbedingungen möglichen und die Produkteigenschaften verändernden Kettenabbaus der Polysaccharide.

Enzyme sind in der Lage, beim Vorliegen mehrerer reaktiver Zentren an einem Molekül, z.B. Hydroxylgruppen, direkte selektive Veresterungen zu katalysieren. Dabei hat jedes Enzym eine bestimmte gefaltete (native) Struktur, die essentiell für die spezifische biokatalytische Aktivität im jeweiligen physiologischen Medium ist. In zahlreichen Publikationen wurde jedoch gezeigt, dass viele Enzyme auch in organischen Lösungsmitteln aktiv sind, d.h. unabhängig von ihrer nativen Struktur, Größe und Funktion. In unpolaren Lösungsmitteln zeigen Enzyme meist hohe Aktivität, wohingegen in relativ polaren Medien nur sehr geringe Aktivität gefunden wird (Biotechnol. Bioteng. 30 (1987), 81-87). Die Enzyme sind in diesen organischen Lösungsmitteln unlöslich.

Derartige enzymkatalysierte Reaktionen sind an niedermolekularen Mono- und Disacchariden in organischen Lösungsmitteln schon zahlreich durchgeführt worden (FEMS Microbiol. Rev. 16 (1995), 193-211; J. prakt. Chem. 335 (1993), 109-127; Synthesis 1992, 895-910; WO 97/36000; WO 95/23871). Dabei wurden vorrangig Lipasen, aber auch Esterasen und Proteasen, als Enzyme und Lösungsmittel wie Tetrahydrofuran, Pyridin und N,N-Dimethylformamid eingesetzt. Enzymatische Veresterungen sind auch in wässriger Pufferlösung durchführbar. Nachteilig ist hierbei, dass das Acylierungsreagens, welches fettsäureähnlichen Charakter hat, nicht in wässriger Pufferlösung löslich ist und damit nur suspendiert werden kann. Das zu veresternde Substrat liegt dabei gelöst vor (DE-A-2430944, 1992; JP-A-63191802).

Bei Glucanen entstehen dabei in der Mehrzahl Ester an primären Hydroxylgruppen. In einigen Fällen tritt die Veresterung auch an sekundären Hydroxylgruppen ein (J. Am. Chem. Soc. 109 (1987), 3977-3981; Enzyme Microb. Technol. 20 (1997), 225-228). Für die genannten enzymatische Veresterungen werden in allgemeinen reaktive Esterverbindungen mit elektronenziehenden Gruppen verwendet, wie Vinylester (Biotechnol. Lett. 19 (1997), 511-514) oder Trihalogenethylester (Tetrahedron 54 (1998), 3971-3982), wobei die Veresterung mit einem Vinylester eine irreversible Reaktion darstellt, da der entstehende Vinylalkohol als Acetaldehyd dem Reaktionsgleichgewicht entzogen wird. Weitere reaktive Verbindungen sind Carbonsäureanhydride und Ester der Kohlensäure.

Desweiteren wurden Dicarbonsäurediester für die Reaktion mit Mono- und Disacchariden eingesetzt. Auf diese Weise konnten neue Copolymere auf Sacharidbasis aufgebaut werden, wie in den US-A-5,270,421 und US-A-5,618,933 gezeigt.

In den beschriebenen Publikationen werden im allgemeinen das Substrat und das Acylierungsreagens in einem organischen Lösungsmittel gelöst, in dem dann das Enzym suspendiert wird. Mit den oben genannten Verfahren sind keine enzymatischen Veresterungen an Polysacchariden, speziell an Glucanen, durchführbar, da das ungelöste und nicht gequollene Polymer dem Enzym bzw. der Enzymkatalyse unzugänglich ist. In heterogener Phase sind Polysaccharide jedoch enzymatisch veresterbar. (WO 96/13632, DE-A-34 30 944). Diese heterogenen Reaktionen verlaufen nur an der Oberfläche der Polymerpartikel, wodurch inhomogen veresterte Polysaccharidderivate entstehen, d.h. Polysacchariderivate, bei denen die Substituentenverteilung entlang der Polymerkette ungleichmäßig ist. Weitere Nachteile dieser Veresterungsverfahren bestehen darin, dass geringe Produktausbeuten erzielt werden und Produkte mit geringer Selektivität bezüglich des Substitutionsortes in der Anhydroglucoseeinheit entstehen.

Konventionelle heterogene Veresterungen werden oftmals in Wasser als Suspensionsmittel durchgeführt (US-P. 5,703,226, 1997). Homogene Umsetzungen erfolgen in organischen Lösungsmitteln oder direkt im Acylierungsreagens (US-P. 5,714,601, 1998; WO 96/14342). Als Acylierungsmittel finden im allgemeinen die entsprechenden Carbonsäureanhydride oder die Vinylester Verwendung. Derartige Veresterungen bzw. Umesterungen werden meist alkalisch katalysiert, wobei als Katalysator Alkalihydroxide, Mineralsäuresalze oder organische Amine in Frage kommen.

Aufgabe der vorliegenden Erfindung war es, den Zugang zu homogenen regioselektiv an der C2-Position der Anhydroglukoseeinheit (AGU) substituierte Ester von Oligo - und Polysacchariden zu ermöglichen.

Erfindungsgemäß gelang es nun, homogen und regioselektiv überwiegend an der C2-Position der AGU substituierte Ester von Oligo- und insbesondere Polysacchariden herzustellen. Gegenstand der Erfindung ist daher ein Verfahren zur Herstellung regioselektiv substituierter Oligo- und Polysaccharidester mit einem partiellen durchschnittlichen Substitutionsgrad DS an der C2-Position der Anhydroglucoseeinheit (AGU) des Oligo- und Polysaccharids, bezogen auf den Gesamt-DS von mindestens 90 %, dadurch gekennzeichnet, dass man das in einem organischen Lösungsmittel oder Lösungsmittelgemisch aus der Gruppe Dimethylsulfoxid (DMSO), N,N-Dimethylformamid (DMF), N,N-Dimethylacetamid (DMA), Pyridin, N,N-Methylmorpholin-N-oxid (NMMO) gelöste oder gequollene Oligo- oder Polysaccharid in Gegenwart eines Enzyms aus der Gruppe der Proteasen bei einer Temperatur im Bereich von 20 bis 45°C für eine Reaktionsdauer von 2 bis 100 h mit einem Veresterungsreagenz umsetzt.

Im erfindungsgemäßen Verfahren werden besonders bevorzugt an der C2-Position regioselektiv substituierte Oligo- und Polysaccaridester Ester von Stärke oder Stärkederivaten, insbesondere Hydroxyethylstärke oder Hydroxypropylstärke eingesetzt. Gegenstand des erfindungsgemäßen Verfahrens sind auch an der C2-Position reisoselektiv substituierte Ester von Cellulose, Celluloseestern oder Celluloseethern, insbesondere Hydroxyethylcellulose oder Methylcellulose, Pullulan oder Maltose. Die erfindungsgemäß hergestellten Oligo- und Polysaccharidester sind durch die durch Umsetzung mit Veresterungsreagenzien aus der Gruppe der Vinylester, der Carbonsäurehydride, Trihalogenethylester sowie der Lactone, die im folgenden bei der Beschreibung des Verfahrens genauer beschrieben werden, erhältlich. Erfindungsgemäß besonders bevorzugt hergestellte, an der C2-Position regioselektiv substituierte Oligo- und Polysaccharidester sind 2-0-Propionylstärke, 2-0-Butyrylstärke, 2-0-Benzoylstärke, 2-0-Laurylstärke, 2-0-Methoxycarbonylstärke, 2-0-Acryloylstärke und 2-0-Methacryloylstärke und ganz besonders bevorzugt 2-0-Acetylstärke. Im erfindungsgemäßen Verfahren können die regioselektiv an der C2-Position substituierten Oligo- und Polysaccharidester an den übrigen OH-Gruppen der AGU mit weiteren Estergruppen verestert sein, die nicht mit den Estergruppen an der C2-Position identisch sind.

Ausgehend von den beschriebenen Nachteilen bekannter Verfahren, wie z.B. geringe Produktausbeuten und Regioselektivitäten, gelingt es dabei, durch Katalyse mittels Enzymen Oligo- und Polysaccharide, die in organischen Lösungsmitteln gelöst bzw. stark gequollen sind, regioselektiv an der sekundären Hydroxylgruppe der C2-Position sowie in Kombination mit der primären Hydroxylgruppe der C6-Position der AGU zu verestern. Das Verfahren führt zu sehr hohen Produktausbeuten, wobei die partiellen Substitutionsgrade in breiten Grenzen variiert und eingestellt werden können. Besonders hohe Regioselektivitäten werden bei α-(1,4)-glycosidisch verknüpften Oligo- und Polysacchariden, insbesondere Stärke, erzielt. Das Verfahren ist aber auch auf β-(1,4)-glucosidisch verknüpfte Oligo- und Polysaccharide anwendbar. Als organische Lösungsmittel grundsätzlich geeignet sind solche, in denen die eingesetzten Oligo- und Polysaccharide stark quellen oder sich lösen und das verwendete Enzym ausreichende Aktivität zeigt. Als organische Lösungsmittel daher können dabei Dimethylsulfoxid (DMSO) N,N-Dimethylformamid (DMF), N,N-Dimethylacetamid (DMA), Pyridin, N-Methylmorpholin-N-oxid (NMMO) sowie Mischungen der genannten Lösungsmittel verwendet werden. Bevorzugt ist DMSO. Überraschenderweise besitzen die Enzyme, insbesondere in DMSO, eine hohe Aktivität und man gelangt in einer einstufigen Reaktion zu streng regioselektiv veresterten Produkten. Durch gezielte Folgereaktionen können diese Ester zu regioselektiv substituierten Mischderivaten, wie z.B. Estern und Ethern, umgesetzt werden.

Die Veresterung kann an Polysacchariden, wie vorzugsweise Stärken aus verschiedenen natürlichen Quellen mit unterschiedlichem Amylosegehalt und Molekulargewicht und Stärkederivaten, insbesondere Hydroxyethylstärken oder Hydroxypropylstärken, aber auch an Cellulose, Cellulosederivaten, Pullulan und Pullulanderivaten und Oligosacchariden durchgeführt werden.

Als Enzyme können Proteasen aller Typen, wie vorzugsweise Serin-, Cystein-, Asparagin- und Metalloproteasen sowie Esterasen Verwendung finden. Dabei werden die Proteasen vorzugsweise in Phosphat-Puffer, alternativ in Carbonat-Puffer, im pH-Bereich 4-9, abhängig vom Enzym, aber vorzugsweise pH=7-8, gelöst und anschließend lyophiliziert. Geeignete Proteasen sind vorzugsweise Proteinase N und Subtilisin von *Bacillus subtilis*, Proteinase 2A von *Aspergillus oryzae*, Proteinase 6 von *Aspergillus sp*., a-Chymotrypsin, Papain, Rennin und Thermolysin.

Als Veresterungsreagenzien kommen vor allem Ester der allgemeinen Formel: 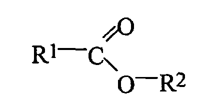 zum Einsatz, wobei R² vorzugsweise Alkyl mit 2 bis 6 C-Atomen, gesättigt, oder ungesättigt sowie verzweigt oder unverzweigt oder gesättigtes Trihalogenalkan mit 2 bis 4 C-Atomen, insbesondere Vinyl, Trihalogenethyl oder Alkyl sein kann. R¹ ist vorzugsweise Alkyl mit 2-18 C-Atomen, gesättigt, ungesättigt, geradkettig, verzweigt oder zyklisch und gegebenenfalls substituiert und Aryl (gegebenenfalls substituiert). Besonders bevorzugt ist R¹ ausgewählt aus der Gruppe Acetyl, Propyl, butyryl, Vinyl, Methacryl, Cinamoyl, Pivaloyl und Cyclohexyl. Beim Einsatz von Alkensäureestern können die Doppelbindungen noch zur Polymerisation genutzt werden, um Netzwerkstrukturen aufzubauen. Diese Möglichkeit besteht auch bei Nutzung von Dicarbonsäurediestern mit dem Rest R², wie z.B. Adipinsäuredivinylester, wobei im speziellen Polysaccharide einheitlich vernetzt werden können.

Besonders geeignete Veresterungsreagenzien sind Vinylacetat, Vinylpropionat, Vinyllaurat, Vinylbutanoat, Vinylstearat, Vinylbenzoat, Vinylacrylat, Vinylmethacrylat, Vinylcrotonat, Vinylpivalat und Divinylpivalat.

Weitere Veresterungsreagenzien sind Carbonsäureanhydride, vorzugsweise Acetanhydrid, Propionsäureanhydrid, Bernsteinsäureanhydrid, Itakonsäureanhydrid, sowie reaktive Lactone, vorzugsweise Propiolacton und a-Angelicalacton. Im Falle von Carbonsäureanhydriden erfolgt die Substitution außer an der C2-Position auch an der C6-Position der AGU.

N-Isopropylidenverbindungen der allgemeinen Formel: 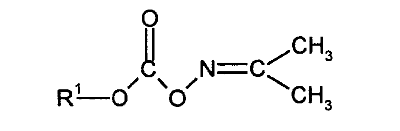 sind gleichfalls als Veresterungsreagenzien einsetzbar, wobei die entsprechenden Kohlensäureester der Oligo- und Polysaccharide entstehen. R¹ ist vorzugsweise Alkyl mit 2-18 C-Atomen, gesättigt, ungesättigt, geradkettig, verzweigt oder zyklisch und gegebenenfalls substituiert und Aryl (gegebenenfalls substituiert). Besonders bevorzugt ist R¹ ausgewählt aus der Gruppe Acetyl, Propyl, Butyryl, Vinyl, Methacryl, Cinamoyl, Pivaloyl und Cyclohexyl.

Besonders geeignete Veresterungsreagenzien aus der Gruppe der N-Isopropylidenverbindungen sind N-Isopropyliden-O-methylcarbonat, N-Isopropyliden-O-ethylcarbonat und N-Isopropyliden-O-benzylcarbonat.

Das erfindungsgemäße Verfahren ist dadurch gekennzeichnet, dass man die Substrate in einem geeigneten organischen Lösungsmittel - im Fall von Stärke in DMSO - löst, Enzym und Umesterungsreagens zugibt und anschließend inkubiert. Die Inkubationstemperatur liegt zwischen 20°C und 85°C, vorzugsweise im Bereich von 20 bis 45°C und insbesondere im Intervall von 35 bis 45°C, dem Temperaturoptimum der verwendeten Enzyme. Die Reaktionszeiten liegen zwischen 2 und 100 h, wobei bezogen auf das Acylierungsreagens ein etwa 50%iger Umsatz stattfindet. Alternativ kann die Aktivierung des Umesterungsreagens durch das Enzym in einem vorgelagerten Schritt erfolgen. Die Enzymabtrennung nach Beendigung der Reaktion erfolgt durch Flüssig-Fest-Trennung (z.B. Zentrifugation, Filtration). Das Produkt wird durch Ausfällen isoliert, gewaschen und getrocknet. Die anfallenden Lösungsmittel sind destillativ aufarbeitbar und anschließend dem Veresterungsprozess wieder zuführbar. Das Enzym kann dabei ohne Aktivitätsverlust im Kreisprozess eingesetzt werden.

Bei Durchführung der Reaktion bei einer Temperatur von 40°C erfolgt im genannten System außer der enzym-katalysierten zu geringen Prozentzahlen, bis zu einem maximalen Gesamtsubstitutionsgrad von DS=0,25, auch eine chemische Veresterung, die aber zu statistisch veresterten Produkten führt. Dies führt dazu, das weitere im Molekül vorhandene Hydroxylgruppen verestert werden. Diese chemische Veresterung lässt sich weitgehend unterdrücken, wenn die Reaktion bei niedrigeren Temperaturen (20-25°C) durchgeführt wird, oder vorzugsweise in nahezu (>0,01 % Wassergehalt) wasserfreien Systemen gearbeitet wird.

Mit dem erfindungsgemäßen Verfahren lässt sich bei Oligo- und Polysacchariden ein partieller Substitutionsgrad von bis zu DS=1,0 an der C2-Position der AGU einstellen. Über die eingesetzten Molequivalente Acylierungsreagens lässt sich ein gewünschter partieller DS≤1.0 an der C2-Position der AGU einstellen (Tab. 1).

**Tab. 1.**

| MolequivalenteVinylacetat und erreichbarer DS_{Acetat} bei der Herstellung von 2-O-Acetylstärke mit Proteinase N in DMSO bei 39°C und 70 h Reaktionszeit | | | | | |
|---|---|---|---|---|---|
| Molequivalente Vinylacetat | 0,5 | 1,0 | 1,5 | 2,3 | 4,0 |
| DS_{Acetat} | 0,3 | 0,5 | 0,7 | 1,0 | 1,1 |

Der partielle DS an der C2-Position der AGU ist außer über die Molequivalente auch über die Reaktionskinetik einstellbar, d.h. je nach Abbruchzeit der Reaktion lassen sich gewünschte DS≤1,0 erzielen (Tab. 2).

**Tab.2**

| Reaktionszeit und erreichbarer DS_{Acetat} bei der Herstellung von 2-O-Acetylstärke mit Proteinase N in DMSO bei 39°C und 2,3 Molequivalente Vinylacetat | | | | | | |
|---|---|---|---|---|---|---|
| Reaktionszeit (h) | 2 | 5 | 10 | 20 | 30 | 70 |
| DS_{Acetat} | 0,1 | 0,3 | 0,5 | 0,8 | 0,9 | 1,0 |

Der Nachweis der Regioselektivität der enzymatisch katalysierten Veresterungsreaktion erfolgte am intaktem Oligo- oder Polysaccharid durch ein- und mehrdimensionale NMR-Spektroskopie. Dafür wurden die restlichen freien Hydroxylgruppen mit einem geeigneten Carbonsäureanhydrid verestert, beispielsweise Propionsäureanhydrid bei Saccharidacetaten oder Acetanhydrid bei Saccharidbenzoaten bzw. anderen Saccharidacylaten. Diese gemischten Ester sind in Chloroform löslich und können NMR-spektroskopisch untersucht werden. Nach Signalauswertung der AGU-Protonen wie Kohlenstoffe über ¹H/¹H und ¹H/¹³C-Korrelation sind die entsprechenden Acylgruppen mit Hilfe der ¹H-detektierten ¹H/¹³C-Mehrfachbindungskorrelation (HMBC-Technik) ihrer Position an der AGU zuordenbar (Carbohydr. Res. 224 (1992), 277-283).

In einer Variante des erfindungsgemäßen Verfahrens wird die Herstellung nur salzkatalysiert ohne weitere Enzymzugabe durchgeführt. Es werden dabei Substitutionsgrade <1,0 an der C2-Position erreicht.

Ein weiterer Gegenstand der Erfindung ist daher ein Verfahren zur Herstellung regioselektiv substituierter Oligo- und Polysaccharidester mit einem partiellen durchschnittlichen Substitutionsgrad DS an der C2-Position der Anhydroglucoseeinheit (AGU) des Oligo- und Polysaccharids, bezogen auf den Gesamt-DS von mindestens 90 %, dadurch gekennzeichnet, dass man das in einem organischen Lösungsmittel oder Lösungsmittelgemisch aus der Gruppe Dimethylsulfoxid (DMSO), N,N-Dimethylformamid (DMF), N,N-Dimethylacetamid (DMA), Pyridin, N,N-Methylmorpholin-N-oxid (NMMO) gelöste oder gequollene Oligo- oder Polysaccharid in Gegenwart eines Salzes aus der Gruppe Na₂HPO₄, Na₂CO₃, MgCO₃, (NH₄)₂CO₃,NH₄Cl, NaCl, NaBr, LiCl, Natriumcitrat bei einer Temperatur im Bereich von 20 bis 100°C für eine Reaktionsdauer von 0,5 bis 100 h mit einem Veresterungsreagenz umsetzt.

Im Unterschied zur enzymischen Katalyse erfolgt die Steuerung der Regioselektivität über den Lösungszustand der Oligo- und Polysaccharide in einem polaren organischen Lösungsmittel, vorzugsweise in DMSO. Die Wechselwirkungen zwischen den Lösungsmittelmolekülen und den AGU-Bausteinen erhöhen die Acidität des Protons der Hydroxylgruppe in der C2-Position der AGU (J. Am. Chem. Soc. 98 (1976), 4386). Mit Hilfe eines geeigneten Salzes als Katalysator kann nun eine vollständige Veresterung dieser Position durchgeführt werden, wobei entweder eine kinetische Reaktionskontrolle oder eine Kontrolle über die Art und die Menge des Katalysators möglich ist (Tab. 3). Das Salz liegt üblicherweise in einer Konzentration von 1-10 Gew.%, bevorzugt 2-5 Gew.%, bezogen auf das Edukt vor.

**Tab. 3:**

| Abhängigkeit der Regioselektivität derAcetylierung von Stärke (Hylon VII) mit Vinylacetat (2,3 Molequivalente) von Reaktionszeit sowie Typ und Menge des Katalysators | | | | |
|---|---|---|---|---|
| **Reaktionszeit (h)** | **Katalysator** | | **Stärkeacetat** | |
| | **Typ** | **Menge (M-%)**^{**1**} | **Ds**_{**gesamt**} | **DS**_{**C2**} |
| 5 | Na₂HPO₄ | 10 | 0,52 | 0,52 |
| 5 | Na₂HPO₄ | 50 | 0,92 | 0,92 |
| 5 | Na₂HPO₄ | 100 | 0,95 | 0,95 |
| 70 | Na₂HPO₄ | 5 | 1,00 | 1,00 |
| 4 | Na₂CO₃ | 10 | 0,45 | 0,45 |
| 4 | Na₂CO₃ | 20 | 0,95 | 0,95 |
| 4 | Na₂CO₃ | 50 | 1,51 | 0,90 |
| 0,5 | K₂CO₃ | 10 | 0,70 | 0,70 |
| 1 | K₂CO₃ | 10 | 1,40 | 0,90 |

| | | | | |
|---|---|---|---|---|
| 1) bezogen auf eingesetzte Stärkemittel | | | | |

Das Verfahren führt zu hohen Produktausbeuten, wobei der partielle Substitutionsgrad definiert eingestellt werden kann. Geeignete Lösungsmittel zur Durchführung dieses Verfahrens sind Dimethylsulfoxid (DMSO), N,N-Dimethylformamid (DMF) sowie N,N-Dimethylacetamid (DMA).

Das Verfahren kann auf Polysaccharide, wie vorzugsweise Stärke mit unterschiedlichen Amylosegehalt und Molekulargewichten, Stärkederivate, wie Hydroxyethylstärke oder Hydroxypropylstärke, Pullulan und Pullulanderivate und Oligosaccharide, wie Cyclodextrine, angewandt werden.

Als Katalysatoren eignen sich anorganische Mineralsäuresalze, Carbonsäuresalze sowie Carbonate der Alkali- und Erdalkalimetalle aus der Gruppe Na₂HPO₄, CaHPO₄, Na₂CO₃, MgCO₃ (NH₄Cl)₂CO₃, Na₂SO₂, NH₄Cl, NaBr, NaCl oder LiCl sowie Natriumcitrat. Um die Veresterung an anderen Hydroxylgruppen, z.B. in der C₃- oder C₆-Position zu unterdrücken, darf beim Einsatz der Salze von schwachen Säuren als Katalysatoren nur maximal 10 Mol-%. bezogen auf die umzusetzende Masse an Oligo- oder Polysaccharid eingesetzt werden und gleichzeitig muss eine definierte Reaktionszeit eingehalten werden.

Als Veresterungsreagenzien kommen vor allem Ester der allgemeinen Formel: 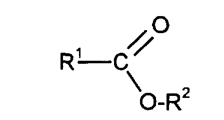 zum Einsatz, wobei R² beispielsweise Vinyl, Trihalogenethyl oder Alkyl sein kann. Beispiele für R¹ sind Alkyl mit 2-18 C-Atomen, gesättigt, umgesättigt, geradkettig, verzweigt oder zyklisch (gegebenenfalls substituiert, und Aryl (gegebenenfalls substituiert). Beim Einsatz von Alkensäureestern können die Doppelbindungen noch zur Polymerisation genutzt werden, um Netzwerkstrukturen aufzubauen. Diese Möglichkeit besteht auch bei Nutzung von Dicarbonsäuredieestern mit dem Rest R², wie z.B. Adipinsäuredivinylester, wobei im speziellen Polysaccharide einheitlich vernetzt werden können.

Weitere Veresterungsreagenzien sind Carbonsäureanhydride, beispielsweise Acetanhydrid, Propionsäureanhydrid, Bernsteinsäureanhydrid, Itakonsäureanhydrid, sowie reaktive Lactone, beispielsweise Propiolacton und α-Angelicalacton. Im Falle von Carbonsäureanhydriden kann die Substitution außer an der C 2-Position auch an der C 6-Position der AGU erfolgen.

N-Isopropylidenverbindung der allgemeinen Formel: 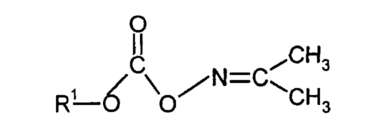 sind gleichfalls als Veresterungsreagenzien einsetzbar, wobei die entsprechenden Kohlensäureester der Oligo- und Polysaccharide entstehen. Beispiele für R¹ sind Alkyl mit 2-18 C-Atomen, gesättigt, ungesättigt, geradkettig, verzweigt oder zyklisch (gegebenenfalls substituiert, und Aryl (gegebenenfalls substituiert).

Das erfindungsgemäße Verfahren ist dadurch gekennzeichnet, dass Oligo- oder Polysaccharide mit aktiven Estern in polaren organischen Lösungsmitttel - vorzugsweise DMSO - unter Anwendung von Salzen zur Katalyse regioselektiv an der Hydroxylgruppe der Position C2 der Anhydroglucoseeinheit acyliert werden. Die Reaktionstemperatur liegt zwischen 20°C und 100°C, vorzugsweise im Bereich von 30°C und 50°C. Die Reaktionszeiten liegen zwischen 0,5 und 100 h, abhängig von er Reaktionstemperatur und vom eingesetzten Katalysator. Die Katalysatorabtrennung erfolgt durch Flüssig-Fest-Trennung (z.B. Zentrifugation, Filtration). Alternativ kann auch dem Fällungsmittel eine definierte Menge Wasser zugegeben werden, um den Katalysator herauszulösen. Der entstehende Ester wird durch Ausfällen isoliert, gewaschen und getrocknet. Die anfallenden Lösungsmittel sind destillativ aufarbeitbar und anschließend dem Veresterungsprozess wieder zuführbar.

Mit dem erfindungsgemäßen Verfahren lässt sich ein partieller Substitutionsgrad an der C2-Position der AGU von bis zu DS=1,0, wahlweise über die Reaktionskinetik oder die eingesetzten Molequivalente Umesterungsreagenz einstellen.

Der Nachweis der Regioselektivität erfolgte mittels zweidimensionaler NMR Spektroskopie. Hierfür muss das acylierte Polysaccharid vollständig propionyliert, im Fall von Acetaten, oder acetyliert, im Fall von anderen Polysaccaharidestern, werden. Mittels Mehrfachbindungskorrelation (HMBC-Technik, Carbohydr. Res 224 (1992), 277-283), kann auf diese Weise der Substitutionsort zweifelfrei nachgewiesen werden.

Die nach den erfindungsgemäßen Verfahren gewonnenen Produkte, wie z.B. Stärkeacetate, sind durch Amylasen abbaubar. Bei geeignetem Molekulargewicht der Stärke und streng regioselektiver Substitution an der C2-Position eignen sich Stärkeacetate als Blutplasmaexpander. Für diese Anwendung besonders geeignet ist 2-0-Acetylstärke. Ein weiterer Gegenstand der Erfindung ist daher die Verwendung von 2-0-Acetylstärke als Blutplasma-Expander. Darüber hinaus können aus Stärkeacylaten bioabbaubare Kunststoffe aufgebaut werden. Durch Vernetzungsprozesse lassen sich Membranen weitgehend einheitlicher Struktur aufbauen. Bei weiterer Derivatisierung könnten auch Absorber für verschiedenste Anwendungen entstehen. Stärkeacylate mit thermoplastischen Eigenschaften sind in der Pharmaindustrie zum Einsatz als Wirkstoffretarda denkbar.

Regioselektiv substituierte Cyclodextrinester können in der pharmazeutischen Industrie als Carrier für Pharmawirkstoffe eingesetzt werden. Desweiteren können hochmolekulare Verbindungen, im Sinne von Copolymeren, aufgebaut werden, die sich zur Chromatographie (z.B. Enantiomerentrennung) eignen könnten.

### Beispiele

### Beispiel 1

40 g Stärke (Hylon VII, hochamylosehaltige, native Maisstärke, Fa. National Starch & Chemical ) werden in 2 l DMSO auf 80°C erhitzt, bis eine klare Lösung entsteht. Nach Abkühlen werden 54 ml Vinylacetat und 750 mg Proteinase N von *Bacillus subtilis* (Herstellung der Protease-Aktivität durch Lösen in Phosphat-Puffer (pH=7,8; c=0,15 M) und anschließende Lyophilisierung, dadurch beträgt die tatsächlich eingewogene Enzymmenge 1,5 g) zugegeben. Die Mischung wird 70 h bei 39°C geschüttelt. Nach Abzentrifugieren des Enzyms wird das klare Zentrifugat ausgefällt. Die 2-O-Acetylstärke wird abgesaugt, gewaschen und abschließend im Vakuum getrocknet.
Man erhält 46 g 2-O-Acetylstärke mit einem DS=1,0.

### Beispiel 2

40 g Stärke (Hylon VII) werden in 21 DMSO auf 80 °C erhitzt, bis eine klare Lösung entsteht. Dann werden 54 ml Vinylacetat und 750 mg Proteinase N von Bacillus subtilis (Herstellung der Proteaseaktivität siehe Beispiel 1) zugegeben. Die Mischung wird 20 h bei 80°C geschüttelt. Nach Abzentrifugieren des Enzyms wird das klare Zentrifugat ausgefällt. die 2O-Acetylstärke wird abgesaugt, gewaschen und abschließend im Vakuum getrocknet.
Man erhält 46 g einer 2-O-Acetylstärke mit einem DS von 1,0.

### Beispiel 3

2 g b-Cyclodextrin (Fa. Fluka) werden in 20 ml DMSO gelöst, und anschließend 2,7 ml Vinylacetat und 37 mg Proteinase N von *Bacillus subtilis* (Herstellung der Protease-Aktivität siehe Beispiel 1) zugegeben. Die Mischung wird 70 h bei 39°C geschüttelt. Nach Abzentrifugieren des Enzyms wird das klare Zentrifugat eingeengt, ausgefällt, gewaschen und abschließend im Vakuum getrocknet. Man erhält 2,1 g Heptakis-2-*O*-acetyl-b-cyclodextrin.

### Beispiel 4

2 g b-Cyclodextrin werden in 20 ml DMF gelöst, und anschließend 2,7 ml Vinylacetat und 37 mg Proteinase N von *Bacillus subtilis* (Herstellung der Protease-Aktivität siehe Beispiel 1) zugegeben. Die Mischung wird 70 h bei 39°C geschüttelt. Nach Abzentrifugieren des Enzyms wird das klare Zentrifugat eingeengt, ausgefällt, gewaschen und abschließend im Vakuum getrocknet. Man erhält 2,1 g Heptakis-2-*O*acetyl-b-cyclodextrin.

### Beispiel 5

2 g Stärke (Hylon VII) werden in 40 ml DMSO auf 80 °C erhitzt, bis eine klare Lösung entsteht. Nach Abkühlen werden 12,5 g 2,2,2-Trichlorethylacetat und 37 mg Proteinase N von *Bacillus subtilis* (Herstellung der Protease-Aktivität siehe Beispiel 1) zugegeben. Die Mischung wird 70 h bei 39°C geschüttelt. Nach Abzentrifugieren des Enzyms wird das klare Zentrifugat ausgefällt. Die 2-O-Acetylstärke wird abgesaugt, gewaschen und abschließend im Vakuum getrocknet.
Man erhält 2,0 g 2-O-Acetylstärke mit einem DS=0,4.

### Beispiel 6

2 g Stärke (Hylon VII) werden in 40 ml DMSO auf 80 °C erhitzt, bis eine klare Lösung entsteht. Nach Abkühlen werden 1,9 g N-Isopropyliden-O-methyl-carbonat und 37 mg Proteinase N von *Bacillus subtilis* (Herstellung der Protease-Aktivität siehe Beispiel 1) zugegeben. Die Mischung wird 70 h bei 39°C geschüttelt. Nach Abzentrifugieren des Enzyms wird das klare Zentrifugat ausgefällt. Das Stärkederivat wird abgesaugt, gewaschen und abschließend im Vakuum getrocknet.
Man erhält 2,0 g 2-O-Methoxycarbonylstärke mit einem DS=0,4.

### Beispiel 7

2 g Stärke (Hylon VII) werden in 40 ml DMSO auf 80 °C erhitzt, bis eine klare Lösung entsteht. Nach Abkühlen werden 2,7 ml Vinylacetat und 37 mg Thermolysin (Herstellung der Protease-Aktivität siehe Beispiel 1) zugegeben. Die Mischung wird 70 h bei 39°C geschüttelt. Nach Abzentrifugieren des Enzyms wird das klare Zentrifugat ausgefällt. Die Acetylstärke wird abgesaugt, gewaschen und abschließend im Vakuum getrocknet.
Man erhält 2,4 g 2,6-O-Diacetylstärke mit einem DS=1,0 an der C2-Position und DS=0,4 an der C6-Position.

### Beispiel 8

2 g Stärke (Hylon VII) werden in 40 ml DMSO auf 80 °C erhitzt, bis eine klare Lösung entsteht. Nach Abkühlen werden 2,7 ml Acetanhydrid und 37 mg Proteinase N von *Bacillus subtilis* (Herstellung der Protease-Aktivität siehe Beispiel 1) zugegeben. Die Mischung wird 70 h bei 39°C geschüttelt. Nach Abzentrifugieren des Enzyms wird das klare Zentrifugat ausgefällt. Die Acetylstärke wird abgesaugt, gewaschen und abschließend im Vakuum getrocknet.
Man erhält 2 g Acetylstärke mit einem DS=0,7 an der C2- und C6-Position der AGU.

### Beispiel 9

0,3 g enzymatisch hergestelltes Stärkeacetat (Beispiel 1) wird in 5 ml Pyridin suspendiert. Zu dieser Suspension werden 0,1 g Dimethylaminopyridin (DMAP) und 5 ml Propionsäureanhydrid gegeben. Es wird 20 h bei 90°C gerührt. Das propionylierte Stärkeacetat wird in Ethanol ausgefällt, intensiv mit Ethanol gewaschen und im Vakuum getrocknet.
Man erhält eine vollständig substituierte 2-O-Acetyl-3,6-O-Dipropionyl-stärke.

Das getrocknete Produkt enthält keine OH-Valenzschwingungen im IR-Bereich 3200-3600 cm⁻¹ und ist Chloroform-löslich, woraus sich folgende NMR-Daten ergeben:
AGU: d=5,22(H1), 4,72(H2), 5,36(H3), 3,91-3,95(H4,H5), 4,53(H6), 4,24(H6')
Propionyl an Pos. 6: d=1,18(CH₃), 2,45(CH₂)
Propionyl an Pos. 3: d=1,05(CH₃), 2,20(CH₂)
Acetyl an Pos. 2: d=1,98(CH₃)
(Bruker DRX 400 NMR-Spektrometer, 323 K)

### Beispiel 10

2 g in N-Methyl-morpholin-N-oxid (NMMNO) gelöste Cellulose wird bei einer Temperatur von T = 80 - 90°C mit DMSO (Volumenverhältnis: VDMSO:VNMMO/1:1) verdünnt. Anschließend werden zur Celluloselösung 2,7 ml Vinylacetat und 37 mg Proteinase N von *Bacillus subtilis* (Herstellung der Protease-Aktivität siehe Beispiel 1) zugegeben. Diese Mischung wird bei einer Temperatur von T = 80°C über einen Zeitraum von 24 h geschüttelt. Nachdem in warmen Wasser ausgefällt wurde, wird mehrfach mit Wasser gewaschen und das Produkt abschließend im Vakuum getrocknet. Man erhält 1,2 g Acetylcellulose mit einem DS von 0,3.

### Beispiel 11

106 g Stärke (Hylon VII, hochamylosehaltige, native Maisstärke, Fa. National Starch & Chemical) werden in 1 l DMSO bei 80°C gelöst. Nach Abkühlen auf 40°C werden langsam 140 ml Vinylacetat und 5 g Na₂HPO₄ zugegeben. Die Mischung wird 70 h gerührt und das unlösliche Na₂HPO₄ abzentrifugiert. Nach Ausfällung des Produktes in Ethanol wird abgesaugt, gewaschen und im Vakuum getrocknet. Man erhlt 116 g 2-O-Acetylstärke mit einem DS = 1,0.

### Beispiel 12

106 g Stärke (Hylon VII, hochamylosehaltige, native Maisstärke, Fa. National Starch & Chemical) werden in 1 l MDSO bei 80°C gelöst. Nach Abkühlen auf 40°C werden langsam 63 ml Vinylacetat und 5 g Na₂HPO₄ zugegeben. Die Mischung wird 70 h gerührt und das unlösliche Na₂HPO₄ abzentrifugiert. Nach Ausfällung des Produktes in Ethanol wird abgesaugt, gewaschen und im Vakuum getrocknet.
Man erhält 102 g 2-O-Acetylstärke mit einem DS = 0,7.

### Beispiel 13

2 g β-Cyclodextrin (Fa. Fluka) werden in 20 ml DMSO gelöst und anschließend 2,7 ml Vinylacetat und 20 mg Na₂HPO₄ zugegeben. Die Mischung wird 70 h bei 40°C gerührt. Nach Abzentrifugieren des anorganischen Salzes wird das Zentrifugat eingeengt, in Ethanol ausgefällt, gewaschen und im Vakuum getrocknet. Man erhält 2,1 g Heptakis-2-O-Acetylcyclodextrin.

### Beispiel 14

2 g Dextrin 20 (Fa. Fluka) werden in 40 ml DMF bei 80°C gelöst und anschließend 2,7 ml Vinylacetat und 20 mg Na₂HPO₄ zugegeben. Die Mischung wird 70 h bei 40°C gerührt. Nach Abzentrifugieren des anorganischen Salzes wird in Ethanol ausgefällt, gewaschen und im Vakuum getrocknet. Man erhält 2 g 2-O-Acetyldextrin 20 mit einem DS = 1,0.

### Beispiel 15

2 g Stärke /Hylon VII, hochamylosehaltige, native Maisstärke, Fa. National Starch & Chemical) werden in 40 ml DMSO bei 80°C gelöst. Nach Abkühlen auf 40°C werden langsam 2,7 ml Vinylacetat und 20 mg Nacl zugegeben. Die Mischung wird 70 h gerührt und das unlösliche NaCl abzentrifugiert. Nach Ausfällung des Produktes in Ethanol wird abgesaugt, gewaschen und im Vakuum getrocknet. Man erhält 2,1 g 2-O-Acetylstärke mit einem DS = 1,0.

### Beispiel 16

2 g Stärke (Hylon VII, hochamylosehaltige, native Maisstärke, Fa. National Starch & Chemical) werden in 40 ml DMSO bei 80°C gelöst. Nach Abkühlen auf 40°C werden langsam 2,7 ml Vinylacetat und 20 mg Na₂CO₃ zugegeben. Die Mischung wird 70 h gerührt und das unlösliche NaCl anzentrifugiert. Nach Ausfällung des Produktes in Ethanol wird abgesaugt, gewaschen und im Vakuum getrocknet. Man erhält 2,1 g 2-O-Acetylstärke mit einem DS = 1,0.

## Patentansprüche

1. Verfahren zur Herstellung regioselektiv substituierter Oligo- und Polysaccharidester mit einem partiellen durchschnittlichen Substitutionsgrad DS an der C2-Position der Anhydroglucoseeinheit (AGU) des Oligo- und Polysaccharids, bezogen auf den Gesamt-DS von mindestens 90 %, **dadurch gekennzeichnet, dass** man das in einem organischen Lösungsmittel oder Lösungsmittelgemisch aus der Gruppe Dimethylsulfoxid (DMSO), N,N-Dimethylformamid (DMF), N,N-Dimethylacetamid (DMA), Pyridin, N,N-Methylmorpholin-N-oxid (NMMO) gelöste oder gequollene Oligo- oder Polysaccharid in Gegenwart eines Enzyms aus der Gruppe der Proteasen bei einer Temperatur im Bereich von 20 bis 45°C für eine Reaktionsdauer von 2 bis 100 h mit einem Veresterungsreagenz umsetzt.

2. Verfahren nach Anspruch 1, **dadurch gekennzeichnet, dass** als Oligo- oder Polysaccharide Stärke aus verschiedenen natürlichen Quellen mit unterschiedlichstem Amylosegehalt und Molekulargewicht, Stärkederivate, Cellulose, Cellulosederivate, Pullulan oder Pullulanderivate, eingesetzt werden.

3. Verfahren nach Anspruch 1, **dadurch gekennzeichnet, dass** als Enzyme Proteinase N, Subtilisin, Protease 2A, Protease 6, a-Chymotrypsin, Rennin, Papain, Thermolysin, oder Esterasen eingesetzt werden.

4. Verfahren nach einem der Ansprüche 1 bis 3, **dadurch gekennzeichnet, dass** als Veresterungsreagenzien Vinylester, insbesondere Vinylacetat, Vinylpropionat, Vinyllaurat, Vinylbutanoat, Vinylstearat, Vinylbenzoat, Vinylacrylat, Vinylmethacrylat, Vinylcrotonat, Vinylpivalat, Divinyladipat, eingesetzt werden.

5. Verfahren nach einem der Ansprüche 1 bis 3, **dadurch gekennzeichnet, dass** als Veresterungsreagenzien Carbonsäureanhydride, insbesondere Acetanhydrid, Propionsäureanhydrid, Bernsteinsäureanhydrid, Itakonsäureanhydrid, oder Trihalogenethylester oder Lactone, insbesondere Propiolacton und Butylrolacton, a-Angelicalacton oder O-substituierte N-Isopropylidencarbonate, N-Isopropyliden-O-methyl-carbonat, insbesondere N-Isopropyliden-O-ethylcarbonat, N-Isopropyliden-O-benzyl-carbonat eingesetzt werden.

6. Verfahren zur Herstellung regioselektiv substituierter Oligo- und Polysaccharidester mit einem partiellen durchschnittlichen Substitutionsgrad DS an der C2-Positionder Anhydroglucoseeinheit (AGU) des Oligo- und Polysaccharids, bezogen auf den Gesamt-DS von mindestens 90 %, **dadurch gekennzeichnet, dass** man das in einem organischen Lösungsmittel oder Lösungsmittelgemisch aus der Gruppe Dimethylsulfoxid (DMSO), N,N-Dimethylformamid (DMF), N,N-Dimethylacetamid (DMA), Pyridin, N,N-Methylmorpholin-N-oxid (NMMO) gelöste oder gequollene Oligo- oder Polysaccharid in Gegenwart eines Salzes aus der Gruppe Na₂HPO₄, Na₂CO₃, MgCO₃, (NH₄)₂CO₃,NH₄Cl, NaCl, NaBr, LiCl, Natriumcitrat bei einer Temperatur im Bereich von 20 bis 100°C für eine Reaktionsdauer von 0,5 bis 100 h mit einem Veresterungsreagenz umsetzt.

7. Verfahren nach Anspruch 6, **dadurch gekennzeichnet, dass** der Substitutionsgrad < 1,0 ist.

8. Verfahren nach Anspruch 6, **dadurch gekennzeichnet, dass** das Salz in einer Konzentration von 1-10 Gew.-%, bezogen auf das Edukt, vorliegt.

9. Oligo- und Polysaccharidester erhältlich nach Anspruch 1 oder 6, **dadurch gekennzeichnet, dass** es sich um 2-O-Propionylstärke, 2-O-Butyrylstärke, 2-O-Benzoylstärke, 2-O-Laurylstärke, 2-O-Methoxycarbonylstärke, 2-O-Acrylolylstärke, 2-O-Methacrylolylstärke oder 2-O-Acetylstärke handelt.

10. Verwendung von 2-O-Acetylstärke nach Anspruch 9 als Blutplasma-Expander.

## Claims

1. Method of producing regioselectively substituted oligosaccharide and polysaccharide esters having a partial average degree of substitution DS at the C2 position of the anhydroglucose unit (AGU) of the oligosaccharide and polysaccharide of at least 90% relative to the total DS, **characterized in that** the oligosaccharide or polysaccharide, swollen or in solution in an organic solvent or solvent mixture from the group consisting of dimethyl sulphoxide (DMSO), N,N-dimethylformamide (DMF), N,N-dimethylacetamide (DMA), pyridine and N,N-methylmorpholine N-oxide (NMMO), is reacted with an esterifying reagent in the presence of an enzyme from the group of the proteases at a temperature in the range from 20 to 45°C for a time of from 2 to 100 h.

2. Method according to Claim 1, **characterized in that** said oligosaccharides or polysaccharides are starches from various natural sources with any of a very wide variety of amylose contents and molecular weights, starch derivatives, cellulose, cellulose derivatives, pullulan or pullulan derivatives.

3. Method according to Claim 1, **characterized in that** said enzymes are proteinase N, subtilisin, protease 2A, protease 6, α-chymotrypsin, rennin, papain, thermolysin or esterases.

4. Method according to one of Claims 1 to 3, **characterized in that** said esterifying reagents are vinyl esters, especially vinyl acetate, vinyl propionate, vinyl laurate, vinyl butanoate, vinyl stearate, vinyl benzoate, vinyl acrylate, vinyl methacrylate, vinyl crotonate, vinyl pivalate and divinyl adipate.

5. Method according to one of Claims 1 to 3, **characterized in that** said esterifying reagents are carboxylic anhydrides, especially acetic anhydride, propionic anhydride, succinic anhydride, itaconic anhydride, or trihaloether esters or lactones, especially propiolactone and butyrolactone, α-angelicalactone or O-substituted N-isopropylidenecarbonates, N-isopropylidene-O-methyl-carbonate, especially N-isopropylidene-O-ethylcarbonate, N-isopropylidene-O-benzyl-carbonate.

6. Method of producing regioselectively substituted oligosaccharide and polysaccharide esters having a partial average degree of substitution DS at the C2 position of the anhydroglucose unit (AGU) of the oligosaccharide and polysaccharide of at least 90% relative to the total DS, **characterized in that** the oligosaccharide or polysaccharide, swollen or in solution in an organic solvent or solvent mixture from the group consisting of dimethyl sulphoxide (DMSO), N,N-dimethylformamide (DMF), N,N-dimethylacetamide (DMA), pyridine and N,N-methylmorpholine N-oxide (NMMO), is reacted with an esterifying reagent in the presence of a salt from the group consisting of Na₂HPO₄, Na₂CO₃, MgCO₃, (NH₄)₂CO₃, NH₄Cl, NaCl, NaBr, LiCl and sodium citrate at a temperature in the range from 20 to 100°C for a time of from 0.5 to 100 h.

7. Method according to Claim 6, **characterized in that** the degree of substitution is < 1.0.

8. Method according to Claim 6, **characterized in that** the salt is in a concentration of 1-10% by weight relative to the reactant.

9. Oligosaccharide and polysaccharide esters obtainable according to Claim 1 or 6, **characterized in that** they are 2-O-propionylstarch, 2-O-butyrylstarch, 2-O-benzoylstarch, 2-O-laurylstarch, 2-O-methoxycarbonylstarch, 2-O-acryloylstarch, 2-O-methacryloylstarch or 2-O-acetylstarch.

10. Use of 2-O-acetylstarch according to Claim 9 as a blood plasma expander.

## Revendications

1. Procédé de préparation d'esters d'oligosaccharides et de polysaccharides substitués de façon régiosélective, présentant un degré de substitution DS moyen partiel en position C2 de l'unité d'anhydroglucose (AGU) de l'oligosaccharide et du polysaccharide, d'au moins 90 % par rapport au DS total, **caractérisé en ce que** l'on fait réagir avec un réactif d'estérification l'oligosaccharide ou le polysaccharide dissous ou gonflé dans un solvant organique ou un mélange de solvants organiques appartenant au groupe du diméthylsulfoxyde (DMSO), du N,N-diméthylformamide (DMF), du N,N-diméthylacétamide (DMA), de la pyridine, du N-oxyde de N,N-méthylmorpholine (NMMO), en présence d'une enzyme appartenant au groupe des protéases, à une température située dans l'intervalle de 20 à 45 °C, pendant une durée de réaction de 2 à 100 h.

2. Procédé selon la revendication 1, **caractérisé en ce que** l'on met en oeuvre comme oligosaccharides ou polysaccharides, de l'amidon provenant de différentes sources naturelles présentant une teneur en amylose et un poids moléculaire variables, des dérivés d'amidon, de la cellulose, des dérivés de cellulose, du pullulane ou des dérivés de pullulane.

3. Procédé selon la revendication 1, **caractérisé en ce que** l'on met en oeuvre comme enzymes, les composés suivants: protéinase N, subtilisine, protéase 2A, protéase 6, alpha-chymotrypsine, rennine ou chymosine, papaïne, thermolysine ou estérases.

4. Procédé selon une des revendications 1 à 3, **caractérisé en ce que** l'on met en oeuvre comme réactifs d'estérification, des esters de vinyle, en particulier de l'acétate vinylique, du propionate vinylique, du laurate vinylique, du butanoate vinylique, du stéarate vinylique, du benzoate vinylique, de l'acrylate vinylique, du méthacrylate vinylique, du crotonate vinylique, du pivalate vinylique ou de l'adipate divinylique.

5. Procédé selon une des revendications 1 à 3, **caractérisé en ce que** l'on met en oeuvre comme réactifs d'estérification, des anhydrides d'acides carboxyliques, en particulier de l'anhydride acétique, de l'anhydride propionique, de l'anhydride succinique, de l'anhydride itaconique ou des esters trihalogénoéthyliques ou des lactones, en particulier du propiolactone et du butylrolactone, de l'alpha-angélicalactone ou des carbonates de N-isopyropylidène O-substitués, du N-isopropylidène-O-méthyl-carbonate, en particulier du N-isopropylidène-O-éthyl-carbonate ou du N-isopropylidène-O-benzyl-carbonate.

6. Procédé de préparation d'esters d'oligosaccharides et de polysaccharides substitués de façon régiosélective, présentant un degré de substitution DS moyen partiel en position C2 de l'unité d'anhydroglucose (AGU) de l'oligosaccharide et du polysaccharide, d'au moins 90 % par rapport au DS total, **caractérisé en ce que** l'on fait réagir avec un réactif d'estérification l'oligosaccharide ou le polysaccharide dissous ou gonflé dans un solvant organique ou un mélange de solvants organiques appartenant au groupe du diméthylsulfoxyde (DMSO), du N,N-diméthylformamide (DMF), du N,N-diméthylacétamide (DMA), de la pyridine, du N-oxyde de N,N-méthylmorpholine (NMMO), en présence d'un sel appartenant au groupe du Na₂HPO₄, Na₂CO₃, MgCO₃, (NH₄)₂CO₃, NH₄Cl, NaCl, NaBr, LiCl ou du citrate de sodium, à une température située dans l'intervalle de 20 à 100 °C, pendant une durée de réaction de 0,5 à 100 h.

7. Procédé selon la revendication 6, **caractérisé en ce que** le degré de substitution est inférieur à 1,0.

8. Procédé selon la revendication 6, **caractérisé en ce que** le sel est présent à une concentration de 1 à 10 % en poids par rapport à l'éduit.

9. Ester d'oligosaccharide et de polysaccharide pouvant être obtenu selon la revendication 1 ou 6, **caractérisé en ce qu'**il s'agit d'amidon 2-O-propionylique, d'amidon 2-O-butyrylique, d'amidon 2-O-benzoylique, d'amidon 2-O-laurylique, d'amidon 2-O-méthoxycarbonylique, d'amidon 2-O-acryloylique, d'amidon 2-O-méthacrylolylique ou d'amidon 2-O-acétylique.

10. Utilisation d'amidon 2-O-acétylique selon la revendication 9 comme substitut du plasma sanguin.
